# FASCICULE DE BREVET EUROPEEN

(11) **EP 1 123 754 B1**
(45) Date de publication et mention de la délivrance du brevet: **27.11.2002**
(21) Numéro de dépôt: 01440022.0
(22) Date de dépôt: 31.01.2001
(51) Int. Cl.: B09B 3/00, E04G 23/08

(54) **Procédé de dépollution de cowpers**
Verfahren zur Dekontaminierung von Winderhitzern
Method for decontaminating cowpers

(43) Date de publication de la demande: 16.08.2001
(73) Titulaire: SCBI Societé de Construction et de Bâtiment et Industrie, 57360 Amneville (FR)
(72) Inventeur: Bongini, Jean-Claude, 57185 Vitry sur Orne (FR)
(74) Mandataire: Littolff, Denis

(56) Documents cités:
- DE-A- 4 219 727
- US-A- 5 201 345
- PATENT ABSTRACTS OF JAPAN vol. 1996, no. 09, 30 septembre 1996 (1996-09-30) & JP 08 120953 A (SHIMIZU CORP), 14 mai 1996 (1996-05-14)
- PATENT ABSTRACTS OF JAPAN vol. 2000, no. 11, 3 janvier 2001 (2001-01-03) & JP 2000 213183 A (TAIHEI DENGYO KAISHA LTD), 2 août 2000 (2000-08-02)

## Description

La présente invention concerne un procédé de dépollution en général, et plus particulièrement de désamiantage d'un ouvrage de type cowper de haut fourneau, précédant notamment la destruction dudit ouvrage. Dans la suite, on se réfèrera, à titre d'exemples préférentiels, à des cowpers, auxquels la mise en oeuvre du procédé s'applique particulièrement bien.

Les cowpers sont des ouvrages verticaux de type tour qui sont utilisés en sidérurgie pour la récupération de la chaleur latente des gaz sortant des hauts fourneaux, en vue du réchauffage de l'air envoyé aux tuyères de ces derniers.

Ils comportent essentiellement une chambre ou puits de combustion et une chambre de récupération. Les gaz sortant des hauts fourneaux, préliminairement épurés et ayant éventuellement subi une addition d'air, sont dans un premier temps brûlés dans la chambre de combustion. Ces gaz brûlés permettent alors le réchauffement des empilages de briques de la chambre de récupération, lesdits empilements de briques étant généralement dénommés ruchage du fait de l'existence d'évidements verticaux destinés au passage du gaz. La chambre de récupération est d'ailleurs également dénommée puits de ruchage.

En une seconde phase, de l'air froid en provenance des machines soufflantes passe également dans le cowper, où il est porté à une température de 700 à 800°C avant d'être envoyé vers les tuyères des hauts fourneaux.

Les cowpers atteignent classiquement de 35 à 40 mètres de hauteur, et ont une configuration d'allure cylindrique présentant un diamètre d'environ 5 à 6 mètres. Ils reposent sur une banquette en béton d'une hauteur d'approximativement six mètres, et sont disposés en batterie de quelques unités par haut fourneau.

En partie supérieure, la tour se termine par un dôme d'allure hémisphérique, notamment doté d'une trémie d'accès. Les parois en briques, formant le manteau du cowper, sont revêtues extérieurement d'une tôle de blindage épaisse.

A l'intérieur, la structure formant le ruchage, ainsi qu'au moins certaines parties des parois internes, sont constituées de briques réfractaires. Sur au moins une portion de la hauteur, généralement en partie supérieure, la tôle de blindage recouvre un revêtement isolant qui est constitué des matériaux considérés aujourd'hui comme nocifs et polluants, dangereux pour la santé, du type amiante, asbeste, amosite, leurs dérivés ou des équivalents.

La destruction des cowpers pose donc le problème particulier de leur dépollution. La présente invention ne s'adresse qu'à cet aspect de la démolition, que l'on dénomme pour simplifier désamiantage. Toutefois, au sens de la présente description, ce terme recouvre la dépollution s'appliquant à tous types de produits industriels susceptibles de susciter des pathologies auprès des personnes qui sont en contact avec lesdits produits ou qui évoluent dans des atmosphères dans lesquels lesdits matériaux polluants peuvent être présents à l'état particulaire.

Ainsi, alors que l'on utilise depuis de nombreuses décennies dans l'industrie des fibres contenant de l'amiante, de l'asbeste, de l'amosite, leurs dérivés ou des mélanges à base de ceux-ci, le risque pathogène de leur utilisation n'est connu que depuis relativement récemment. Les avancées scientifiques sur ce sujet ont entraîné une modification des réglementations en vigueur à propos des environnements utilisant ces produits, et l'établissement de règles spécifiques pour leur recyclage ou leur destruction. Dans de nombreux cas, le problème se pose en effet de façon aiguë lorsqu'il est envisagé de détruire des équipements dont au moins une partie en recèle. C'est notamment le cas des cowpers construits il a plusieurs décennies, et qui utilisent les propriétés attrayantes de ces produits en terme d'isolation et de non combustibilité.

La destruction d'un cowper implique par conséquent à présent la réalisation d'une dépollution préalable. Pour éviter tout risque de contamination de l'atmosphère, la dépollution était jusqu'ici conduite avant toute autre opération de démolition. Compte tenu de leur configuration verticale et de leur hauteur, les procédés en vigueur posent cependant de multiples problèmes.

En particulier, il faut mettre en place une structure lourde, composée principalement d'un échafaudage s'élevant sur une hauteur d'environ 40 mètres, et d'une largeur suffisante pour permettre la mise en place en hauteur de sas de travail, sas de décontamination, sas de stockage, sas pour le personnel, etc...

Outre ces installations permettant l'accès et le traitement dans des conditions acceptables de la matière recyclée, le travail à cette hauteur nécessite la mise en place d'une ou plusieurs installations de levage, de type grue à flèche, grue à tour, monorail ou équivalent. Il s'agit d'un matériel lourd, dont la gestion implique des compétences spécifiques.

Le traitement de dépollution des cowpers en position verticale implique par conséquent l'utilisation d'un matériel important, lourd à gérer et coûteux. Ce type de traitement comporte de plus des risques accrus pour le personnel. Le fait de travailler à plusieurs dizaines de mètres du sol, outre les risques intrinsèques de chute, engendre pour le personnel un risque d'accoutumance, car les opérations de traitement nécessitent une certaine durée. Le risque de chute est encore augmenté du fait de ce phénomène d'accoutumance.

La manutention des matériaux objet du traitement, de volume et de poids souvent non négligeables, représentent eux-mêmes un facteur de danger à cette hauteur du fait de leur nature.

Enfin, l'ensemble de ces risques est à supporter pendant toute la durée du chantier, beaucoup plus longue qu'un chantier traditionnel de dépollution au niveau du sol, car la place limitée autorisée par les structures suspendues oblige à travailler avec des plus petites quantités de matériel, et à étaler dans le temps les opérations. L'exiguïté des sas de traitement peut d'ailleurs également être considérée comme un facteur aggravant, les opérations de traitement et de recyclage n'y étant guère facilitées.

La présente invention se propose de remédier à ces inconvénients, en proposant une solution qui permet de procéder à la dépollution dans de bonnes conditions de travail, sans risques autres pour les personnels concernés que ceux qui résultent du traitement de dépollution proprement dit.

L'idée qui est à la base du procédé de l'invention est en fait de permettre le traitement au niveau du sol, après avoir fait chuter l'ouvrage, le faisant ainsi passer d'une orientation verticale à une orientation horizontale. Tous les problèmes et risques liés à la configuration particulière des ouvrages, et en particulier à leur hauteur, se trouvent donc écartés.

Le procédé de dépollution de l'invention se caractérise essentiellement par les étapes suivantes :
- réalisation d'un remblai dont la surface supérieure plane est au niveau de la surface supérieure de la banquette en béton supportant le cowper, ladite surface étant de dimensions excédant celles du cowper, et au moins la couche supérieure dudit remblai étant prévue en matériau amortissant ;
- remplissage du puits de combustion et du dôme du cowper au moyen d'un matériau injecté sous forme liquide, et se solidifiant ensuite dans les volumes creux remplis ;
- abattage du cowper par destruction de sa base au voisinage de la banquette de béton de sorte qu'il tombe d'une seule masse sur le remblai, sensiblement suivant l'axe de celui-ci, et y repose horizontalement intact ;
- déblayage progressif du remblai pour que le cowper couché repose sur le sol dégagé des matériaux ayant formé ledit remblai ;
- dépollution des parties revêtues de matériaux polluants après mise en place d'une installation de décontamination réglementaire.

Le principal problème technique qui se pose est de préserver la structure de l'ouvrage au cours de sa chute. Celui-ci doit conserver, en particulier dans ses portions revêtues de matériaux polluants, son intégrité structurelle, notamment afin de garantir que des composants particulaires desdits matériaux ne soient pas dispersés dans l'atmosphère. L'étape de remplissage des volumes creux de la tour est à cet égard déterminante, car elle fige l'ensemble en un volume plein, solide et résistant.

De manière également essentielle, la chute de l'ouvrage est soigneusement préparée par la réalisation du remblai, dont la configuration et la composition sont prévues pour amortir la chute, toujours dans l'objectif primordial de préserver la structure de l'ouvrage abattu.

De préférence, le matériau de remplissage du puits de combustion et du dôme consiste en du béton allégé à faible masse volumique.

Le béton allégé permet d'organiser le maintien intact de la structure par l'exercice d'une action interne sur le manteau de briques qui forme la paroi du cowper, en n'augmentant cependant pas inconsidérablement le poids du cowper. Les produits polluants se trouvent dès lors emprisonnés entre la tôle de blindage externe et le manteau de briques dont la résistance est considérablement renforcée par l'existence de ce noyau interne solide.

L'utilisation d'un matériau de remplissage dont la masse volumique soit la plus faible possible, en diminuant le poids de l'ensemble, réduit l'impact en fin de chute. Cette caractéristique se combine étroitement à celle qui a trait au soin particulier mis dans la réalisation du remblai, car elles concourent à la réalisation de l'objectif principal, à savoir conserver la structure de l'ouvrage intact dans sa position horizontale. Chacune de ces caractéristiques n'a cependant de sens que si l'autre est satisfaite.

De préférence, le remplissage se fait par phases successives, chaque phase succédant à la précédente lorsque le matériau injecté en phase précédente est solidifié.

Le puits de ruchage du cowper est considéré au sens du procédé comme un volume plein, et ne fait donc pas l'objet d'un remplissage par le matériau injecté dans le puits de combustion et le dôme. Il est au contraire prévu de réutiliser les briques constituant le ruchage, et le puits est par conséquent recouvert en partie supérieure d'un élément étanche empêchant son remplissage.

Plus précisément, cet élément étanche consiste en une bâche déployée sur la surface supérieure du ruchage.

Pour éviter tout problème de fuite, ou de rupture de l'élément étanche au cours du remplissage du dôme, dont le volume important conduit à faire reposer sur la bâche un bloc de masse considérable, ledit remplissage commence par une première phase consistant en la coulée d'une première couche de quelques centimètres (une dizaine) d'épaisseur, servant de dalle pour les phases de remplissage ultérieures et préservant l'élément étanche d'une pression trop importante.

Bien entendu, le remplissage des volumes creux étant effectué par le haut, le dôme n'est traité qu'une fois que la phase de remplissage du puits de combustion est achevée.

En préalable à celle-ci, la trémie du brûleur du puits de combustion est obturée par une plaque métallique bridée avec pose d'un joint d'étanchéité sur la collerette de ladite trémie.

Selon une possibilité, cette plaque est en acier, d'une épaisseur de l'ordre de 20 mm.

Comme on l'a mentionné auparavant, l'injection du matériau de remplissage s'effectue par le haut du cowper, après ouverture de la trémie d'accès au dôme, démolition du ou des bouchon(s) réfractaire(s) situé(s) sous ladite trémie, et mise en place d'une installation de pompage dotée d'un tuyau inséré dans le cowper par cet accès.

L'opération de mise en place de l'installation de pompage est cependant précédée par une phase de ventilation au moyen d'air comprimé évacuant les gaz résiduels qui pourraient se trouver dans le cowper.

Cette précaution s'explique par le fait que du personnel est amené à travailler à l'intérieur du cowper, pendant l'opération de remplissage, et il est par conséquent nécessaire de s'assurer que l'air y est respirable, et plus généralement de faire en sorte que l'atmosphère ne présente aucun danger pour les opérateurs.

Une vérification est d'ailleurs réalisée après la ventilation pour constater l'innocuité de l'air.

Les opérateurs procèdent ensuite à la mise en place d'une échelle d'accès leur permettant de descendre dans le dôme, au niveau supérieur du ruchage. Des dispositifs de sécurité permettant d'empêcher la chute des agents et d'assurer leur sortie rapide du dôme sont alors mis en place à l'intérieur de l'ouvrage. Le volume intérieur est évidemment éclairé, et le personnel qui doit descendre est équipé de protections individuelles de sécurité du type harnais, casque, gants, chaussures de sécurité, etc...

La mise en place de la structure sécuritaire comporte notamment l'installation d'une protection horizontale sur le puits, réalisée par exemple avec des planches, madriers et nappes de treillis soudés, en vue de rendre impossible la chute des opérateurs dans le puits. Les intervenants procèdent ensuite à la pose d'un garde-corps en périphérie du puits de combustion.

Une fois ces opérations de sécurité effectuées, les opérateurs installent l'élément étanche précité, puis une installation de pompage appropriée, c'est-à-dire capable de pomper le béton sur une hauteur pouvant aller jusqu'à 40 mètres. L'extrémité du tuyau de cette pompe est descendue par la trémie supérieure du dôme jusqu'au puits intérieur, et le pompage peut débuter.

Lorsque le cowper est rempli de béton allégé solidifié ou équivalent, la troisième étape principale du procédé, consistant en l'abattage du cowper par destruction de sa base, peut débuter.

Ladite destruction est réalisée au moyen d'explosifs répartis en plusieurs emplacements de la base, et de découpes périphériques de la tôle de blindage, la disposition des emplacements des explosifs et dès découpes déterminant l'orientation de la chute du cowper.

Plus précisément, des explosifs sont disposés dans au moins une portion de la périphérie de la paroi du cowper, après découpe de pastilles dans la tôle de blindage puis perçage de trous dans le manteau de briques de ladite paroi. Le forage de trous dans les briques aboutit en fait à la création de logements dans lesquels sont insérés les explosifs.

Dans la description des étapes précédentes, on a mis en lumière l'importance du remblai, destiné à amortir la chute de l'ouvrage afin que sa structure soit préservée. Il est donc essentiel que la destruction de la base du cowper soit effectuée de manière à orienter correctement la chute, pour que le cowper retombe bien sur le matelas qui lui a été préparé. Dans cette optique, la portion de la périphérie de la paroi équipée d'explosifs est à titre principal celle qui fait face au remblai.

De préférence, cette portion de paroi est située à l'opposé du puits de combustion.

En d'autres termes, on fait tomber le cowper de manière à ce qu'il soit en contact avec le matelas, en position horizontale, via la paroi périphérique du puits de ruchage, et que le puits de combustion soit alors disposé en partie supérieure.

Des explosifs sont également disposés dans des orifices pratiqués dans des poteaux creux soutenant le plancher du puits de ruchage. Pour que l'impact de l'explosion soit bien réparti dans lesdits poteaux, ceux-ci sont de plus remplis d'eau.

La disposition correcte des explosifs est cependant une condition nécessaire mais non suffisante pour contrôler l'orientation de la chute. Il faut également que les découpes périphériques dans la tôle de blindage soit effectuée de manière adéquate.

Ainsi, une découpe périphérique d'un écart angulaire supérieur à 180° est pratiquée dans la tôle de blindage de la portion de paroi faisant face au remblai, et une découpe périphérique est pratiquée dans la portion de paroi opposée au remblai au niveau de la banquette support du cowper.

Plus précisément, la longueur de la découpe périphérique de tôle dans la paroi faisant face au remblai est égale à 56% du pourtour du cowper au niveau où elle est pratiquée. De préférence, ce niveau est choisi de manière telle que la découpe est pratiquée sous le plancher supportant le puits de ruchage.

L'orientation de la chute qui en résulte est celle que l'on a mentionné ci-dessus, aboutissant au positionnement du puits de combustion en partie supérieure de l'ouvrage lorsqu'il est couché.

Lorsque le cowper est couché sur son remblai, il n'est pas possible de procéder immédiatement au traitement de dépollution. Il faut préalablement dégager ledit remblai, afin que l'ouvrage couché repose sur le sol, sur lequel il est possible de mettre en place les installations de décontamination.

Le remblai est réalisé avec des matériaux de différentes natures pouvant amortir la chute de l'ouvrage, suivant au moins deux couches principales, la couche supérieure ne contenant que des matériaux sans éléments durs, mais offrant une bonne aptitude à l'amortissement.

Plus précisément, les matériaux utilisés pour la ou les couches inférieure(s) sont des matériaux de récupération du type déblais de démolition, crasses, calcaire, briques, etc...

De préférence, on utilise des matériaux qui sont disponibles dans l'environnement immédiat du cowper à démolir.

Enfin, les matériaux utilisés dans la couche supérieure sont des matériaux souples du type terre, argile, sable, etc... Tous ces matériaux permettent d'amortir de façon optimale la chute du cowper, du fait de leur plasticité.

A ce stade, le cowper se trouve couché sur le sol, sans avoir subi de dommages notamment dans sa partie revêtue des produits polluants.

L'enlèvement desdits matériaux polluants s'effectue enfin, après dégagement du remblai et après avoir installé le ou les sas nécessaires, par découpe de portions de tôles métalliques de taille dépendant des moyens de levage intégrés au(x) sas, et utilisation simultanée d'un matériau fixateur de fibres.

Selon une possibilité, la découpe des portions de tôles est réalisée au moyen d'au moins une scie murale munie d'un disque de découpe acier.

Enfin, le matériau fixateur de fibres est de préférence un gel avec lequel on arrose la zone de découpe.

On garantit ainsi que les particules dangereuses ne sont pas expulsées dans l'atmosphère, avec les risques précités.

Bien entendu, toutes les installations de décontamination et de traitement des produits polluants sont rigoureusement conformes aux réglementations en vigueur. Le travail au sol procure un avantage déterminant en facilitant l'installation des différents sas, ne nécessitant dès lors plus que des moyens de levage plus légers et beaucoup plus faciles à manipuler, et autorisant un plus grand confort pour les opérateurs chargés du traitement.

L'invention va à présent être décrite plus en détail, en référence aux figures annexées, pour lesquelles :
- la figure 1 est une vue schématique d'un cowper vertical sur sa banquette de béton, le remblai ayant été préparé pour amortir la chute ;
- la figure 2 montre en vue de dessus une batterie de cowpers dont deux exemplaires sont destinés à être abattus, un remblai ayant été préparé à cet effet ;
- la figure 3 est une vue en section d'un cowper sur sa banquette.

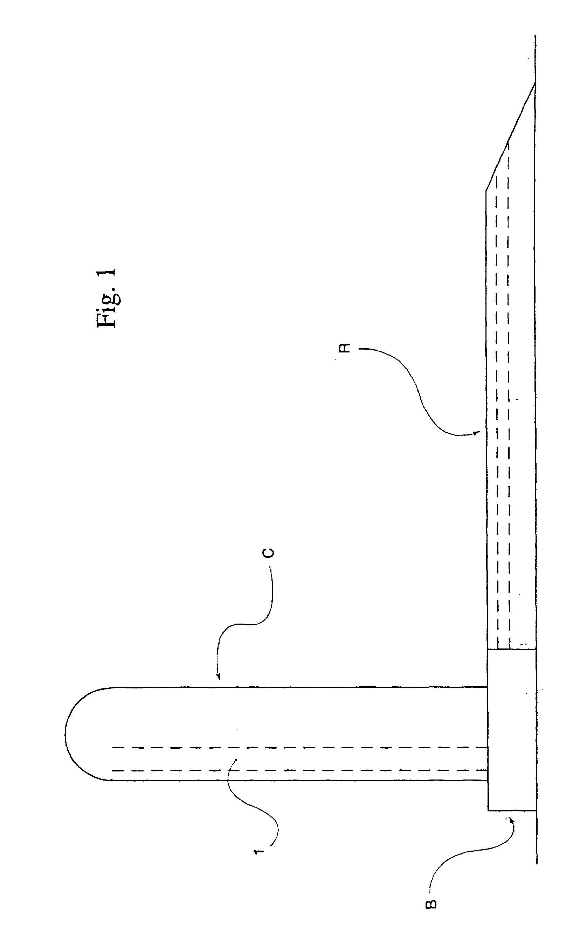

En référence à la figure 1, le cowper (C) est représenté de manière très schématique, dressé sur banquette (B), en général en béton, dans la continuité de laquelle a été établi un remblai (R) constitué de plusieurs couches successives. Ce remblai (R) présente une surface supérieure d'allure plane qui est sensiblement au même niveau que la surface supérieure de la banquette (B).

La longueur du remblai (R) doit être supérieure à la hauteur du cowper (C), c'est-à-dire être de l'ordre de 40 mètres. Le puits de combustion (1) du cowper (C) est schématisé en traits pointillés, afin de montrer l'orientation relative du cowper (C) et du remblai (R). La face avant du cowper (C), dans la direction de la chute, est dans ce cas la paroi qui est opposée à l'emplacement du puits de combustion (1), et qui limite par conséquent le puits de ruchage.

La couche inférieure du remblai (R) est par exemple constituée de déblais de démolition, dont la nature n'a que de peu d'importance, car cette couche inférieure a pour fonction principale le rehaussement pour permettre la mise à niveau des couches supérieures.

La couche intermédiaire, par exemple constituée de crasses et de briques, n'est pas non plus essentielle en terme d'amortissement. Toutefois, elle se compose en général d'éléments de- volume moins importants que ceux qui sont utilisés dans la couche inférieure.

Enfin, la couche supérieure doit assurer la réception et l'amortissement du cowper lorsqu'il chute de sa position verticale vers la position horizontale. Cette couche doit donc avoir une souplesse et une plasticité appropriées, et elle est composée de matériaux sans éléments durs, plutôt choisis parmi les matériaux particulaires et/ou meubles de type terre, sable, etc...

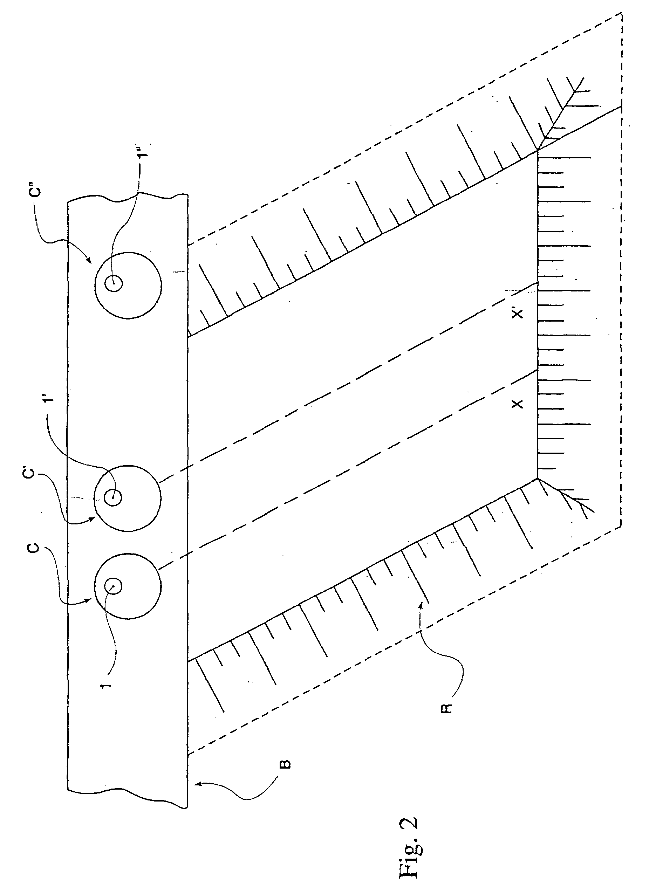

La représentation de la figure 2 précise la localisation relative des différents éléments. Les deux cowpers référencés (C, C') sont destinés à être abattus, alors que le cowper (C") n'est pas affecté par la démolition. Le remblai (R) est par conséquent disposé au pied des deux premiers cités. Il est orienté sensiblement parallèlement aux axes (x, x') prévus pour la chute des deux cowpers (C, C').

Lorsque lesdits cowpers (C; C') sont en position horizontale, le remblai (R) est progressivement déblayé, de manière à ce qu'ils se retrouvent au niveau du sol, au pied de la banquette (B).

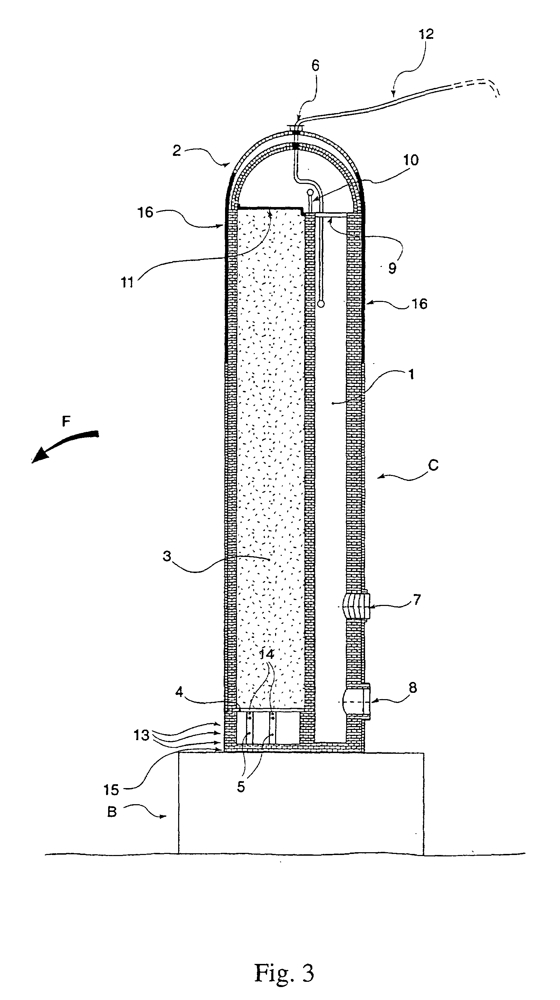

En référence à la figure 3, dans lequel le cowper (C) est montré en section, on voit apparaître les différents volumes qui le constituent. Ainsi, outre le puits de combustion (1) déjà mentionné, le cowper (C) comporte un dôme (2) recouvrant un volume creux d'allure hémisphérique, un puits de ruchage (3) supporté par un plancher (4), lequel est à son tour soutenu par des colonnes (5).

Un cowper (C) traditionnel comprend un certain nombre de trémies d'accès, dont seules les plus importantes ont été représentées dans la figure 3, pour simplifier l'explication.

Ainsi, le dôme est surmonté d'une trémie d'accès (6), alors que le puits de combustion (1) est à titre principal doté d'une trémie de sortie du vent chaud (7) et d'une trémie d'accès au brûleur (8).

La partie supérieure du dôme (2) comporte deux parois de briques distinctes, chacune étant obstruée par un bouchon situé dans l'axe de la trémie d'accès (6). Ces bouchons sont à démolir pour avoir accès à l'intérieur du cowper (C), notamment pour mettre en place les différents dispositifs nécessaires à la mise en oeuvre de l'invention.

Dans une première phase de préparation, les opérateurs, après avoir fait sauter lesdits bouchons, mettent en place à l'intérieur une échelle d'accès à la partie supérieure du ruchage (lequel est représenté par une surface mouchetée, qui symbolise le volume rempli de briques réfractaires et d'évidement constituant ledit ruchage). Les opérateurs qui descendent dans ce volume sous dôme (2) mettent ensuite en place une protection horizontale (9) sur l'extrémité supérieure du puits (1). Cette protection peut par exemple être fabriquée au moyen de planches, de nappes de treillis soudées, de madriers, etc..., et a pour but d'empêcher la chute des intervenants dans le puits (1). Un garde-corps (10) est de plus posé en périphérie de ce dernier.

Enfin, la phase préliminaire se termine par la pose d'une bâche (11) sur la surface supérieure du ruchage (3), qui ne doit pas être affectée par la phase de remplissage. Le ruchage (3) peut ainsi être récupéré pour d'autres applications.

La phase de remplissage proprement dite peut alors commencer, à l'aide d'une installation de pompage adaptée à la hauteur de l'ouvrage, un tuyau (12) étant alors inséré dans le volume intérieur du cowper (C) via la trappe d'accès (6). Ce tuyau (12) est bien entendu relié à l'installation de pompage couplé au réservoir de béton liquide. Le pompage s'effectue en plusieurs étapes, permettant un remplissage graduel d'une part du puits de combustion (1), puis du volume enclos par le dôme (2), en commençant par une dalle de faible épaisseur notamment destinée à protéger le puits de ruchage (3).

Préalablement à l'opération de remplissage, la trémie d'accès au brûleur (8) ainsi que la trémie de sortie des vents chauds (7) sont obstruées à l'aide de plaques métalliques bridées de manière étanche auxdites trémies (7, 8).

Lorsque la phase de remplissage est terminée, la phase de pose des explosifs et de découpe de la tôle de blindage qui entoure le cowper (C) peut commencer.

Dans l'hypothèse évoquée, notamment en référence aux figures précédentes, aboutissant à une chute dans le sens de la flèche F, les explosifs sont de préférence posés d'une part dans des logements (13) pratiqués dans le manteau en briques du cowper (C) sous le plancher (4) supportant le ruchage (3), et d'autre part dans les piliers (5), aux emplacements référencés (14).

Ces emplacements (14) résultent en fait du forage d'orifices particuliers dans les poteaux creux (5). Ceux-ci sont également remplis d'eau afin de répartir l'impact au moment de l'explosion. La tôle de blindage externe est ensuite découpée, sur la face avant, dans le sens de la chute, au niveau figuré par la flèche (15), et sur la face arrière au niveau de la banquette (B). Cette découpe se fait en réalité préalablement à la disposition des explosifs dans les orifices prévus à cet effet.

De fait, la disposition des charges d'explosif est elle-même précédée d'une mise en place d'un périmètre de sécurité sur le chantier. Le tir est ensuite exécuté, puis la zone et l'ouvrage sont vérifiés, et on procède enfin au retrait du périmètre de sécurité.

La phase de dégagement du remblai peut alors commencer, qui se termine par la mise au sol du cowper (C) couché. Les différents sas et installations de désamiantage, et plus généralement de dépollution, sont alors mis en place.

Dans la représentation de la figure 3, la partie à traiter du cowper se situe sensiblement dans le tiers supérieur, les produits polluants (16) étant disposés entre la tôle de blindage et le manteau en briques en partie supérieure de l'ouvrage. C'est dans cette zone que s'effectue la dépose par panneau de la peau métallique, simultanément à un arrosage d'un gel de fixation empêchant l'expulsion dans l'atmosphère des particules issues des fibres au moment de l'opération de découpe.

On procède ensuite à la dépose des produits pollués, l'ensemble se faisant conformément à la législation en vigueur.

## Revendications

1. Procédé de dépollution d'un ouvrage de type cowper de haut fourneau comportant des matériaux polluants notamment à base d'amiante, **caractérisé par** les étapes suivantes :
- réalisation d'un remblai dont la surface supérieure plane est au niveau de la surface supérieure de la banquette en béton supportant le cowper, ladite surface étant de dimensions excédant celles du cowper, et au moins la couche supérieure dudit remblai étant prévue en matériau amortissant ;
- remplissage du puits de combustion et du dôme du cowper au moyen d'un matériau injecté sous forme liquide, et se solidifiant ensuite dans les volumes creux remplis ;
- abattage du cowper par destruction de sa base au voisinage de la banquette de béton de sorte qu'il tombe d'une seule masse sur le remblai, sensiblement suivant l'axe de celui-ci, et y repose horizontalement intact ;
- déblayage progressif du remblai pour que le cowper couché repose sur le sol dégagé des matériaux ayant formé ledit remblai ;
- dépollution des parties revêtues de matériaux polluants après mise en place d'une installation de décontamination réglementaire.

2. Procédé de dépollution d'un ouvrage de type cowper selon la revendication précédente, **caractérisé en ce que** le matériau de remplissage du puits de combustion et du dôme consiste en du béton allégé à faible masse volumique.

3. Procédé de dépollution d'un ouvrage de type cowper selon l'une des revendications précédentes, **caractérisé en ce que** le remplissage se fait par phases successives, chaque phase succédant à la précédente lorsque le matériau injecté en phase précédente est solidifié.

4. Procédé de dépollution d'un ouvrage de type cowper selon l'une quelconque des revendications précédentes, **caractérisé en ce que** le puits de ruchage est recouvert en partie supérieure d'un élément étanche empêchant son remplissage lors de l'opération de remplissage du dôme.

5. Procédé de dépollution d'un ouvrage de type cowper selon la revendication précédente, **caractérisé en ce que** ledit élément étanche consiste en une bâche déployée sur la surface supérieure du ruchage.

6. Procédé de dépollution d'un ouvrage de type cowper selon l'une des revendications 4 et 5, **caractérisé en ce que** le remplissage du dôme commence par une première phase consistant en la coulée d'une première couche de quelques centimètres d'épaisseur, servant de dalle pour les phases de remplissage ultérieures et préservant l'élément étanche d'une pression trop importante.

7. Procédé de dépollution d'un ouvrage de type cowper selon l'une quelconque des revendications précédentes, **caractérisé en ce que** la trémie du brûleur du puits de combustion est obturée avant remplissage par une plaque métallique bridée avec pose d'un joint d'étanchéité sur la collerette de ladite trémie.

8. Procédé de dépollution d'un ouvrage de type cowper selon l'une quelconque des revendications précédentes, **caractérisé en ce que** l'injection du matériau de remplissage s'effectue par le haut du cowper, après ouverture de la trémie d'accès au dôme et démolition du ou des bouchon(s) réfractaire(s) situé(s) sous ladite trémie, et mise en place d'une installation de pompage dotée d'un tuyau inséré dans le cowper par cet accès.

9. Procédé de dépollution d'un ouvrage de type cowper selon les revendications précédentes, **caractérisé en ce que** l'opération de mise en place de l'installation de pompage est précédée par une phase de ventilation au moyen d'air comprimé évacuant les gaz résiduels.

10. Procédé de dépollution d'un ouvrage de type cowper selon l'une quelconque des revendications précédentes, **caractérisé en ce que** la destruction de la base du cowper pour provoquer sa chute est réalisée au moyen d'explosifs répartis en plusieurs emplacements de ladite base, et de découpes périphériques de la tôle de blindage, la disposition des emplacements des explosifs et des découpes déterminant l'orientation de la chute du cowper.

11. Procédé de dépollution d'un ouvrage de type cowper selon la revendication précédente, **caractérisé en ce que** des explosifs sont disposés dans au moins une portion de la périphérie de la paroi du cowper, après découpe de pastilles dans la tôle de blindage puis perçage de trous dans le manteau de briques de ladite paroi.

12. Procédé de dépollution d'un ouvrage de type cowper selon la revendication précédente, **caractérisé en ce que** la portion de la périphérie de la paroi équipée d'explosifs est celle qui fait face au remblai.

13. Procédé de dépollution d'un ouvrage de type cowper selon la revendication précédente, **caractérisé en ce que** la portion de paroi faisant face au remblai est située à l'opposé du puits de combustion.

14. Procédé de dépollution d'un ouvrage de type cowper selon l'une quelconque des revendications 10 à 13, **caractérisé en ce que** des explosifs sont disposés dans des orifices pratiqués dans des poteaux creux soutenant le plancher du puits de ruchage.

15. Procédé de dépollution d'un ouvrage de type cowper selon la revendication précédente, **caractérisé en ce que** lesdits poteaux creux sont remplis d'eau.

16. Procédé de dépollution d'un ouvrage de type cowper selon l'une quelconque des revendications 10 à 15, **caractérisé en ce qu'**une découpe périphérique d'un écart angulaire supérieur à 180° est pratiquée dans la tôle de blindage de la portion de paroi faisant face au remblai, et une découpe périphérique au niveau de la banquette support du cowper est pratiquée dans la portion de paroi opposée au remblai.

17. Procédé de dépollution d'un ouvrage de type cowper selon la revendication précédente, **caractérisé en ce que** la longueur de la découpe périphérique de tôle dans la paroi faisant face au remblai est égale à 56% du pourtour du cowper au niveau où elle est pratiquée.

18. Procédé de dépollution d'un ouvrage de type cowper selon l'une des revendications 16 et 17, **caractérisé en ce que** la découpe périphérique de tôle dans la paroi faisant face au remblai est pratiquée dans la paroi du côté du puits de ruchage, sous le plancher supportant ledit puits.

19. Procédé de dépollution d'un ouvrage de type cowper selon l'une quelconque des revendications précédentes, **caractérisé en ce que** le remblai est réalisé avec des matériaux de différentes natures pouvant amortir la chute de l'ouvrage, suivant au moins deux couches principales dont la couche supérieure ne contient que des matériaux sans éléments durs et présentant des caractéristiques amortissantes.

20. Procédé de dépollution d'un ouvrage de type cowper selon la revendication précédente, **caractérisé en ce que** les matériaux utilisés pour la ou les couches inférieures sont des matériaux de récupération du type déblais de démolition, crasses, calcaire, briques, etc...

21. Procédé de dépollution d'un ouvrage de type cowper selon l'une des revendications 19 et 20, **caractérisé en ce que** les matériaux utilisés dans la couche supérieure sont des matériaux souples et plastiques du type terre, argile, sable, etc...

22. Procédé de dépollution d'un ouvrage de type cowper selon l'une quelconque des revendications précédentes, **caractérisé en ce que** l'enlèvement des matériaux polluants du cowper couché s'effectue, après avoir installé le ou les sas nécessaires, par découpe de portions de tôles métalliques de taille dépendant de moyens de levage intégrés au(x) sas, et utilisation simultanée d'un matériau fixateur de fibres.

23. Procédé de dépollution d'un ouvrage de type cowper selon la revendication précédente, **caractérisé en ce que** la découpe des portions de tôles est réalisée au moyen d'au moins une scie murale munie d'un disque de découpe acier.

24. Procédé de dépollution d'un ouvrage de type cowper selon l'une des revendications 22 et 23, **caractérisé en ce que** le matériau fixateur de fibres est un gel avec lequel on arrose la zone de découpe.

## Claims

1. Decontamination process for a cowper type structure of a blast furnace containing contaminating materials based in particular on asbestos, **characterized by** the following steps:
- construction of an embankment of which the flat upper surface is level with the upper surface of the concrete seating supporting the cowper, the said surface having dimensions exceeding those of the cowper, and at least the upper layer of the said embankment being provided with a cushioning material;
- filling the combustion chamber and dome of the cowper with a material injected in liquid form that then solidifies in the filled hollow volumes;
- demolishing the cowper by destroying its base close to the concrete seating so that it falls in a single mass onto the embankment, substantially following the axis thereof, and rests intact horizontally;
- progressive stripping of the embankment so that the cowper lies resting on the ground free from the materials that had formed the said embankment;
- decontamination of the parts clad with contaminating materials after having put in place a statutory decontamination installation.

2. Process for decontaminating a structure of the cowper type according to the preceding claim, **characterized in that** the material for filling the combustion chamber and the dome consists of low density lightened concrete.

3. Process for decontaminating a structure of the cowper type according to one of the preceding claims, **characterized in that** filling is carried out in successive phases, each phase succeeding the previous one when the material injected in the previous phase has solidified.

4. Process for decontaminating a structure of the cowper type according to any one of the preceding claims, **characterized in that** the checker chamber is covered at its upper part with a leakproof element preventing it from being filled during the operation for filling the dome.

5. Process for decontaminating a structure of the cowper type according to the preceding claim, **characterized in that** the said leakproof element consists of a tarpaulin deployed on the upper surface of the checker chamber.

6. Process for decontaminating a structure of the cowper type according to either of claims 4 or 5, **characterized in that** filling of the dome commences by a first phase consisting of casting a first layer a few centimetres thick, acting as a slab for subsequent filling phases and protecting the sealing element from too high a pressure.

7. Process for decontaminating a structure of the cowper type according to any one of the preceding claims, **characterized in that** the hopper of the combustion chamber is closed off by a flanged metal plate before filling, a sealing gasket being positioned on the collar of the said hopper.

8. Process for decontaminating a structure of the cowper type according to any one of the preceding claims, **characterized in that** the filling material is injected through the top of the cowper after opening the access hatch to the dome and demolishing the refractory plug(s) situated under the said hatch, and setting up a pumping installation provided with a pipe inserted in the cowper through this means of access.

9. Process for decontaminating a structure of the cowper type according to the preceding claims, **characterized in that** the operation of setting up the pumping installation is preceded by a ventilation phase employing compressed air to remove the residual gases.

10. Process for decontaminating a structure of the cowper type according to any one of the preceding claims, **characterized in that** destruction of the base of the cowper so as to cause the latter to fall is achieved by means of explosives distributed in several locations on the said base and by means of peripheral cutouts in the reinforcing metal sheet, the positioning of the locations for the explosives and of the cutouts determining the direction in which the cowper will fall.

11. Process for decontaminating a structure of the cowper type according to the preceding claim, **characterized in that** the explosives are positioned in at least one portion of the periphery of the wall of the cowper after having cut out plugs in the reinforcing metal sheet and then drilling holes in the brick casing of the said wall.

12. Process for decontaminating a structure of the cowper type according to the preceding claim. **characterized in that** the portion of the periphery of the wall equipped with explosives is that facing the embankment.

13. Process for decontaminating a structure of the cowper type according to the preceding claim, **characterized in that** the portion of the wall facing the embankment is situated opposite the combustion chamber.

14. Process for decontaminating a structure of the cowper type according to any one of claims 10 to 13, **characterized in that** explosives are positioned in orifices made in the hollow posts supporting the checker chamber.

15. Process for decontaminating a structure of the cowper type according to the preceding claim, **characterized in that** the said hollow posts are filled with water.

16. Process for decontaminating a structure of the cowper type according to any one of claims 10 to 15, **characterized in that** a peripheral cutout with an angular separation greater than 180° is made in the reinforcing metal sheet of the portion of the wall facing the embankment, and a peripheral cutout at the level of the seating supporting the cowper is made in the portion of the wall opposite the embankment.

17. Process for decontaminating a structure of the cowper type according to the preceding claim, **characterized in that** the length of the peripheral cutout in the metal sheet in the wall facing the embankment is equal to 56 % of the periphery of the cowper at the level where it is made.

18. Process for decontaminating a structure of the cowper type according to either of claims 16 or 17, **characterized in that** the peripheral cutout in the metal sheet in the wall facing the embankment is made in the wall beside the checker chamber, under the floor supporting the said chamber.

19. Process for decontaminating a structure of the cowper type according to any one of the preceding claims, **characterized in that** the embankment is made with materials of different natures that can cushion the fall of the structure, in at least two principal layers of which the upper layer only contains materials without hard elements and which has cushioning characteristics.

20. Process for decontaminating a structure of the cowper type according to the preceding claim, **characterized in that** the materials used for the lower layer(s) are recovered materials of the demolition debris type, slag, limestone, bricks etc.

21. Process for decontaminating a structure of the cowper type according to either of claims 19 or 20, **characterized in that** the materials used in the upper layer are flexible plastic materials of the earth, clay, sand type etc.

22. Process for decontaminating a structure of the cowper type according to any one of the preceding claims, **characterized in that** the contaminating materials of the fallen cowper are removed after having installed the necessary airlock(s), by cutting out portions of the metal sheets having a size depending on the lifting means incorporated in the airlock(s) and by simultaneously using a material for fixing the fibres.

23. Process for decontaminating a structure of the cowper type according to the preceding claim, **characterized in that** the portions of the metal sheet are cut out by means of a wall saw fitted with a disc for cutting steel.

24. Process for decontaminating a structure of the cowper type according to either of claims 22 or 23, **characterized in that** the material fixing the fibres is a gel with which the cutting zone is sprayed.

## Patentansprüche

1. Verfahren zum Schutz vor einer Umweltverschmutzung durch ein Hochofen-Gestell des Typs Winderhitzer, das umweltverschmutzende Materialien insbesondere auf Amiantbasis enthält, **gekennzeichnet durch** die folgenden Schritte:
- Herstellen einer Aufschüttung, deren ebene obere Fläche sich auf Höhe der oberen Fläche des den Winderhitzer tragenden Betonbanketts befindet, wobei diese Fläche Abmessungen besitzt, die jene des Winderhitzers übersteigen, und wobei wenigstens die obere Schicht der Aufschüttung aus einem dämpfenden Material vorgesehen ist;
- Befüllen des Heizschachts und der Kuppel des Winderhitzers mit einem in flüssiger Form eingespritzten Materials, das sich anschließend in den gefüllten Hohlvolumina verfestigt;
- Abbauen des Winderhitzers **durch** Zerstören seiner Grundfläche in der Umgebung des Betonbanketts in der Weise, daß er als Ganzes auf die Aufschüttung im wesentlichen längs der Achse derselben fällt und darauf unbeschädigt horizontal aufliegt;
- allmähliches Wegräumen der Aufschüttung, damit der umgelegte Winderhitzer auf dem Boden aufliegt, der von den Materialien, die die Aufschüttung gebildet haben, befreit ist;
- Schützen vor einer Umweltverschmutzung **durch** mit umweltverschmutzenden Materialien beschichtete Teile, nachdem eine vorschriftsmäßige Dekontaminierungsanlage installiert worden ist.

2. Verfahren zum Schutz vor einer Umweltverschmutzung durch ein Gestell des Typs Winderhitzer nach dem vorhergehenden Anspruch, **dadurch gekennzeichnet, daß** das Material zum Befüllen des Heizschachts und der Kuppel aus Leichtbeton mit geringer Volumenmasse besteht.

3. Verfahren zum Schutz vor einer Umweltverschmutzung durch ein Gestell des Typs Winderhitzer nach einem der vorhergehenden Ansprüche, **dadurch gekennzeichnet, daß** die Befüllung in aufeinanderfolgenden Phasen erfolgt, wobei jede Phase der vorhergehenden folgt, wenn sich das in der vorhergehenden Phase eingespritzte Material verfestigt hat.

4. Verfahren zum Schutz vor einer Umweltverschmutzung durch ein Gestell des Typs Winderhitzer nach einem der vorhergehenden Ansprüche, **dadurch gekennzeichnet, daß** der Gitterungsschacht im oberen Teil mit einem dichten Element bedeckt ist, das dessen Befüllung während des Befüllungsvorgangs der Kuppel verhindert.

5. Verfahren zum Schutz vor einer Umweltverschmutzung durch ein Gestell des Typs Winderhitzer nach dem vorhergehenden Anspruch, **dadurch gekennzeichnet, daß** das dichte Element aus einer auseinandergefalteten Plane auf der oberen Fläche der Gitterung besteht.

6. Verfahren zum Schutz vor einer Umweltverschmutzung durch ein Gestell des Typs Winderhitzer nach einem der Ansprüche 4 und 5, **dadurch gekennzeichnet, daß** die Befüllung der Kuppel durch eine erste Phase beginnt, die im Gießen einer ersten Schicht mit einer Dicke von einigen Zentimetern besteht, welche als Platte für die späteren Befüllungsphasen dient und das dichte Element vor einem zu hohen Druck bewahrt.

7. Verfahren zum Schutz vor einer Umweltverschmutzung eines Gestells des Typs Winderhitzer nach einem der vorhergehenden Ansprüche, **dadurch gekennzeichnet, daß** der Trichter des Brenners des Heizschachts vor der Befüllung durch eine angeflanschte Metallplatte verschlossen wird, wobei auf den Kranz des Trichters eine Dichtung gesetzt wird.

8. Verfahren zum Schutz vor einer Umweltverschmutzung durch ein Gestell des Typs Winderhitzer nach einem der vorhergehenden Ansprüche, **dadurch gekennzeichnet, daß** das Einspritzen des Befüllungsmaterials von der Oberseite des Winderhitzers erfolgt, nachdem der Trichter für den Zugang zur Kuppel geöffnet worden ist und der oder die feuerfeste(n) Stopfen, der (die) sich unter dem Trichter befindet (befinden), zerstört worden ist (sind) und nachdem eine Pumpanlage installiert worden ist, die mit einer durch diesen Zugang in den Winderhitzer eingeführten Rohrleitung versehen ist.

9. Verfahren zum Schutz vor einer Umweltverschmutzung durch ein Gestell des Typs Winderhitzers nach den vorhergehenden Ansprüchen, **dadurch gekennzeichnet, daß** dem Vorgang des Installierens einer Pumpanlage eine Phase der Belüftung mittels Druckluft, die die Restgase abführt, vorhergeht.

10. Verfahren zum Schutz vor einer Umweltverschmutzung durch ein Gestell des Typs Winderhitzer nach einem der vorhergehenden Ansprüche, **dadurch gekennzeichnet, daß** die Zerstörung der Grundplatte des Winderhitzers mit dem Ziel, ihn zu Fall zu bringen, mittels Sprengstoffen, die auf mehrere Stellen der Grundplatte verteilt werden, und mittels Umfangseinschnitten in das Abschirmungsblech erfolgt, wobei die Anordnung der Stellen für die Sprengstoffe und die Einschnitte die Orientierung des Falls des Winderhitzers bestimmt.

11. Verfahren zum Schutz vor einer Umweltverschmutzung durch ein Gestell des Typs Winderhitzer nach dem vorhergehenden Anspruch, **dadurch gekennzeichnet, daß** die Sprengstoffe in wenigstens einem Abschnitt des Umfangs der Wand des Winderhitzers angeordnet werden, nachdem aus dem Abschirmungsblech Pillen ausgeschnitten worden sind und dann in den Ziegelmantel der Wand Löcher gebohrt worden sind.

12. Verfahren zum Schutz vor einer Umweltverschmutzung durch ein Gestell des Typs Winderhitzer nach dem vorhergehenden Anspruch, **dadurch gekennzeichnet, daß** der Umfangsabschnitt der Wand, der mit Sprengstoffen versehen wird, jener ist, der der Aufschüttung zugewandt ist.

13. Verfahren zum Schutz vor einer Umweltverschmutzung durch ein Gestell des Typs Winderhitzer nach dem vorhergehenden Anspruch, **dadurch gekennzeichnet, daß** sich die Wand, die der Aufschüttung zugewandt ist, gegenüber dem Heizschacht befindet.

14. Verfahren zum Schutz vor einer Umweltverschmutzung durch ein Gestell des Typs Winderhitzer nach einem der Ansprüche 10 bis 13, **dadurch gekennzeichnet, daß** die Sprengstoffe in Öffnungen angeordnet werden, die in Hohlstützen ausgebildet sind, die die Decke des Gitterungsschachts unterstützen.

15. Verfahren zum Schutz vor einer Umweltverschmutzung durch ein Gestell des Typs Winderhitzer nach dem vorhergehenden Anspruch, **dadurch gekennzeichnet, daß** die Hohlstützen mit Wasser gefüllt sind.

16. Verfahren zum Schutz vor einer Umweltverschmutzung durch ein Gestell des Typs Winderhitzer nach einem der Ansprüche 10 bis 15, **dadurch gekennzeichnet, daß** in dem Abschirmungsblech des der Aufschüttung zugewandten Wandabschnitts ein Umfangsschnitt mit einem Winkelabstand von mehr als 180° ausgebildet wird und in dem der Aufschüttung gegenüberliegenden Wandabschnitt auf Höhe des Bankettträgers des Winderhitzers ein Umfangsschnitt ausgebildet wird.

17. Verfahren zum Schutz vor einer Umweltverschmutzung durch ein Gestell des Typs Winderhitzer nach dem vorhergehenden Anspruch, **dadurch gekennzeichnet, daß** die Länge des Umfangsschnitts im Blech der der Aufschüttung zugewandten Wand auf der Höhe, auf der er ausgebildet ist, 56 % des Umfangs des Winderhitzers beträgt.

18. Verfahren zum Schutz vor einer Umweltverschmutzung eines Gestells des Typs Winderhitzer nach einem der Ansprüche 16 und 17, **dadurch gekennzeichnet, daß** der Umfangsschnitt im Blech in der der Aufschüttung zugewandten Wand in dieser Wand von seiten des Gitterungsschachts unter der den Schacht tragenden Decke ausgebildet wird.

19. Verfahren zum Schutz vor einer Umweltverschmutzung durch ein Gestell des Typs Winderhitzer nach einem der vorhergehenden Ansprüche, **dadurch gekennzeichnet, daß** die Aufschüttung mit Materialien unterschiedlicher Art verwirklicht wird, die den Fall des Gestells dämpfen können, gefolgt von wenigstens zwei Hauptschichten, wovon die obere Schicht nur Materialien ohne harte Elemente aufweist und Dämpfungseigenschaften besitzt.

20. Verfahren zum Schutz vor einer Umweltverschmutzung durch ein Gestell des Typs Winderhitzer nach dem vorhergehenden Anspruch, **dadurch gekennzeichnet, daß** die für die eine oder die mehreren unteren Schichten verwendeten Materialien wiedergewonnene Materialien des Typs Abrißabraum, Schutt, Kalk, Ziegel usw. sind.

21. Verfahren zum Schutz vor einer Umweltverschmutzung durch ein Gestell des Typs Winderhitzer nach einem der Ansprüche 19 und 20, **dadurch gekennzeichnet, daß** die in der oberen Schicht verwendeten Materialien weiche und plastische Materialien des Typs Erde, Lehm, Sand usw. sind.

22. Verfahren zum Schutz vor einer Umweltverschmutzung durch ein Gestell des Typs Winderhitzer nach einem der vorhergehenden Ansprüche, **dadurch gekennzeichnet, daß** das Beseitigen der umweltverschmutzenden Materialien des umgelegten Winderhitzers nach der Installation der einen oder mehreren erforderlichen Schleusen durch Zerschneiden von Metallblechabschnitten, die eine Größe besitzen, die von den in die Schleuse(n) integrierten Hebemitteln abhängt, und durch gleichzeitige Verwendung eines fasrigen Fixierungsmaterials erfolgt.

23. Verfahren zum Schutz vor einer Umweltverschmutzung durch ein Gestell des Typs Winderhitzer nach dem vorhergehenden Anspruch, **dadurch gekennzeichnet, daß** das Zerschneiden in Blechabschnitte mittels wenigstens einer Mauersäge erfolgt, die mit einem Stahlschneidblatt versehen ist.

24. Verfahren zum Schutz vor einer Umweltverschmutzung durch ein Gestell des Typs Winderhitzer nach einem der Ansprüche 22 und 23, **dadurch gekennzeichnet, daß** das fasrige Fixierungsmaterial ein Gel ist, mit dem die Schnittzone benetzt wird.
